**Europäisches Patentamt**

(19) **European Patent Office**

**Office européen des brevets**

(11) Publication number: **0 167 401**
**A2**

(12) # EUROPEAN PATENT APPLICATION

(21) Application number: **85304780.1**

(22) Date of filing: **04.07.85**

(51) Int. Cl.⁴: **B 01 D 9/00**

(30) Priority: **04.07.84 FI 842699**

(43) Date of publication of application:
**08.01.86 Bulletin 86/2**

(84) Designated Contracting States:
**CH DE FR LI NL**

(71) Applicant: **NESTE OY**
**Keilaniemi**
**SF-02150 Espoo 15(FI)**

(72) Inventor: **Heiskanen, Tomi**
**Vuorimiehenkatu 16 F 32**
**00140 Helsinki(FI)**

(74) Representative: **Ruffles, Graham Keith et al,**
**MARKS & CLERK 57-60 Lincoln's Inn Fields**
**London WC2A 3LS(GB)**

(54) Procedure and means for separating or purifying organic substances.

(57) The invention concerns a procedure and a means for separating or purifying organic substances from a mixture of substances in molten state by crystallizing the substance to be separated/purified on a cooled surface. The substance mixture in molten state is conducted at an infeed point (30) into an annular space (13) confined by a rotating cylindrical shell surface (11), which is cooled, and by another cylindrical shell surface (12) spaced therefrom. The substance to be purified/separated is cystallized on the surface of the rotating, cooled shell (11) to form a deposit (20), which is melted at a first removal point (31), whereat at least part of the melted purified material is removed and the remaining part is conducted in a return flow (B) back along the annular space (13). Impure molten substance mixture is conducted off at a second removal point (32) located, as seen in the direction of rotation (A) of the cooled shell surface (11), upstream to the infeed point (30).

FIG.1

Folio: 799P50530


Procedure and means for separating or purifying organic substances



The present invention concerns a procedure for separating or purifying a substance to be separated/purified from a substance mixture
in molten state by crystallizing onto a cooled surface.

The invention also concerns a means for separating and purifying
substances, in said means crystallizing of the substances to be
separated taking place from a mixture in molten state onto a cooled
surface.

Purifying or separating organic substances by crystallizing from a
melt of the substances is very well known technology. The attainable efficiency of separation can be found out from the phase
diagram of the substance mixture in question.

Most commercial melt crystallizing processes make use of indirect
cooling. The heat to be removed is then transferred through a
partition, for instance through a tube wall, to the coolant.

Crystallizing may take place either in suspension or directly onto
the cooled surface. In the latter case most often a batch-type
crystallizer is concerned, where the accruing crystal deposit is
detached by melting, whereby no new mixture to be crystallized can
be introduced in the same apparatus at the same time. However,
continuously operating crystallizers are also known, which are
provided with cooling, melting and mixing apparatus. As an example
of rotating melt crystallizers may be mentioned, for instance, the
means disclosed in the German Patents No. 2.214.481 and 2.057.824.

In the German Patent No. 2.214.481 is disclosed a cylinder crystallizer, in which the crystallizing space consists of the lowermost
part of an annular space left between two rotating cylinders, one
inside the other. Both cylinders rotate through a horizontal axis.

0167401

Into the annular space between the cylinders is conducted melt to
be treated, this melt being crystallized at the lowermost point of
the annular space to form a plug with the aid of coolers located
outside the annular space. The crystallizing surface of the plug is
flushed all the time by a flow of the melt being treated, at the
same time non-crystallizing components of the mixture and impurities being removed from the melt with the aid of a pipe carried
into the annular space.

The invention concerns a new procedure for separating or purifying
organic substances in which better purifying efficiency and controllability of crystallization are achieved, compared with prior
technology. The procedure of the invention works equally well as a
batch process and as a continuous process. The invention also
concerns a cylinder crystallizer in which the procedure of the
invention is applied. With the cylinder crystallizer of the invention better efficiency and controllability can be achieved, and
substantially higher capacity, than in any crystallizer of prior
art, and it can operate both as a batch crystallizer and a continuous action crystallizer.

The procedure and means of the invention for separating or purifying from a substance mixture in molten state the substance to be
separated or purified on a cooled surface is characterized in that
the substance mixture in molten state is conducted at an infeed
point into an annular space confined by a rotating cylindrical
shell surface, which is being cooled, and by another cylindrical
shell surface spaced therefrom, the substance to be purified or
separated being crystallized on the surface of said rotating,
cooled shell to form a deposit, which is melted at a first removal
point located downstream from the infeed point as seen in the
direction of rotation of the cooled shell surface, at least part of
the melted purified substance being hereat removed and the other
part being conducted in a reflux flow back along the annular space,
and that impure molten substance mixture is conducted out at a
second removal point located upstream from the infeed point as seen
in the direction of rotation of the cooled shell surface.

It is essential in the procedure of the invention that it enables
an appropriate temperature gradient to be established between the
purified material removal point and the impure material removal
point. Another essential circumstance is the flow of the crystallized and remelted material in counterflow, along the crystal
deposit that has crystallized on the cooled, rotating shell surface, and its consequent flushing effect.

In consequence of the above, the procedure of the invention affords
numerous advantages. Nearly all of the surface area of the rotating
shell surface is available for crystallizing. In the procedures of
prior art only part of the shell surface has been used towards
crystallizing.

Another advantage is that the crystallizing starts at the point
where the impurity of the melt is highest. The thickness of the
crystallized deposit increases in the direction of rotation of the
drum towards the purified material removal point, where the
crystallized deposit has its greatest thickness. This implies that
the greater part of the crystallized material has crystallized at a
point where the melt has greater purity. Therefore the purifying
effect of the procedure of the invention is substantially superior
to that of any procedure of prior art.

The invention also concerns a means for applying the procedure. The
means of the invention for separating or purifying organic substances in which crystallizing takes place from a mixture of the substances to be separated on a cooled surface is characterized in
that the means comprises a first rotating, cylindrical shell surface which can be cooled, a second cylindrical shell surface spaced
from said first shell surface, an annular space between said first
rotating shell surface and said second cylindrical shell surface,
members for removing purified substance from the surface of said
rotating, cooled shell on remelting at a point located, as seen in
the direction of rotation of said rotating, cooled shell surface,
downstream from the point where the molten substance mixture to be
treated is introduced, members for removing impure substance mixture from said annular space at a point located, as seen in the direction of rotation of said cooled shell surface, upstream to the point where the material to be treated is introduced, members for conducting the substance to be treated in molten state into said annular space, members for cooling said rotating shell surface, and members for melting the pure substance mixture close to the pure substance removal point.

The invention is now described in detail, referring to certain advantageous embodiments of the invention, presented in the figures of the attached drawings, to which however the invention is not meant to be exclusively confined.

Fig. 1 presents an advantageous embodiment of the means employed in the procedure of the invention, in top view.

Fig. 2 presents another advantageous embodiment of the means employed in the procedure of the invention, in top view.

Fig. 3 displays graphically the separating efficiency of the procedure and means of the invention, plotted over the speed of rotation of the shell surface.

Fig. 4 illustrates graphically the separation of a naphthalene/-$\beta$-methylnaphthalene mixture, plotted over time, at 1/4 r.p.m. speed of rotation.

Fig. 5 likewise illustrates the separation of a naphthalene/-$\beta$-methylnaphthalene mixture, plotted over time, at 1/5 r.p.m. speed of rotation.

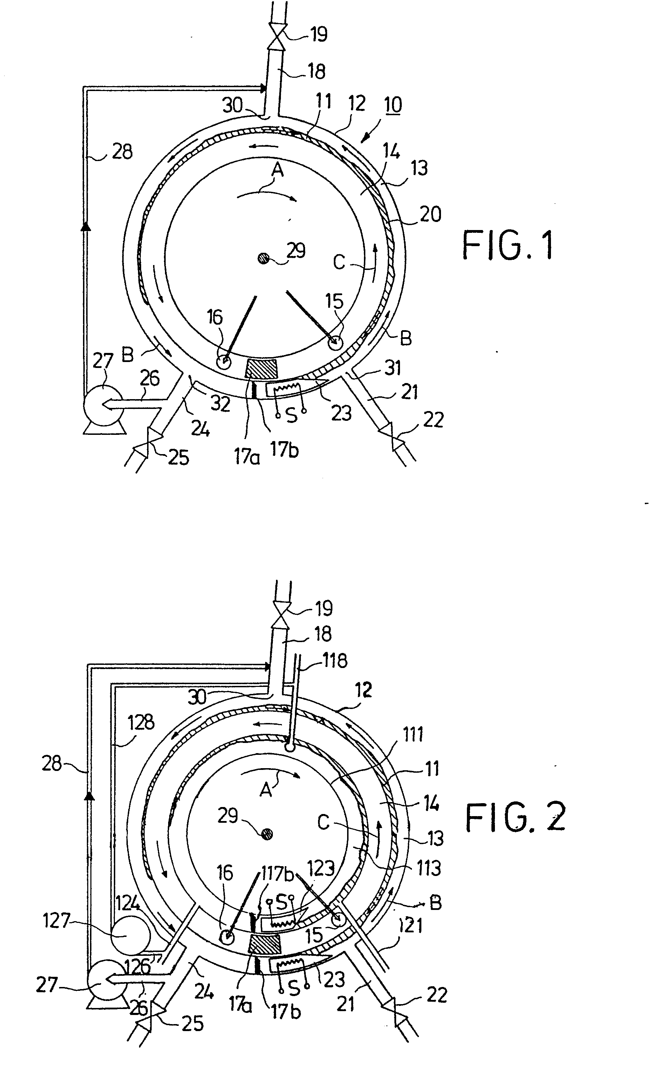

In the embodiment of Fig. 1, the means employed in implementing the procedure of the invention has been indicated in general with the reference numeral 10. In this embodiment, the means 10 comprises a rotating cylindrical shell surface 11 and another cylindrical shell surface 12 spaced therefrom, these shell surfaces 11,12 defining an annular space 13. The shell surface 11 is cooled with a cooling jacket 14, into which cooling liquid is conducted by the supply pipe 15. The cooling water is removed from the cooling jacket 14 through the drain pipe 16. In the cooling jacket 14 has been provided an insulating partition 17a to guide the cooling liquid.
Naturally, there may equally be two or more insulating walls 17a.
In the annular space 13 is provided an insulating plate, or separator, 17b which has been fitted with friction contact so that it
keeps stationary in the annular space 13.

The means 10 furthermore comprises a feed line 18, its valve carrying the reference numeral 19, a pure product output 21, its valve
carrying the reference numeral 22, and an impure product output 24,
its valve carrying the reference numeral 25. The deposit of melt
that has solidified in the annular space 13 on the surface of the
shell 11 has been indicated with the reference numeral 20. In the
annular space 13 has been disposed a heater element 23, which is
 preferably an electric resistance. The heater element 23 may also
replace the separator or insulating plate 17b.

Part of the impure product may be conducted from the impure product
output 24 by a branch line 26 to a circulating member 27, e.g. a
pump, which has been disposed to conduct part of the impure product
by a return line 28 to the melt supply line 18. Reference numeral
29 indicates the vertical axis of rotation about which the cylindrical shell surface 11 has been disposed to rotate.

In Fig. 1 of the drawing, the direction of rotation of the cylindrical shell surface 11, and at the same time the direction of
motion of the substance that has solidified on the shell surface,
has been indicated with the arrow A, the direction in which the
returning melt moves with the arrow B, and the direction in which
the cooling liquid moves with the arrow C.   ·

In Fig. 1 the melt input point has been indicated with reference
numeral 30, the pure product removal point with 31, respectively
the impure product removal point with 32.

It is characteristic in the means of Fig. 1 that the substance
mixture in molten state is at the infeed point 30 conducted into
the annular space 13, which is confined by the rotating cylindrical shell surface 11, which is cooled, and by the other cylindrical shell surface 12 spaced therefrom. With the shell surface 11 rotating in the direction indicated by the arrow A, the substance to be purified/separated is crystallized on the surface of the rotating, cooled shell 11 to form a crystal deposit 20. The crystal deposit 20 is remelted at the first removal point 31, which is located, as seen in the direction of rotation A of the cooled shell surface 11, downstream from the infeed point 30, at least part of the melted purified material being in this connection removed by the removal line 21. The rest of the melted purified material is conducted in the form of a return flow B back along the annular space 13. Impure molten substance mixture is conducted off at the second removal point 32, which is located, as seen in the direction of rotation A of the cooled shell surface 11, upstream to the infeed point 30.

In the procedure of the invention, the fluid cooling the shell surface 11 that has to be cooled is introduced at a point which lies close to the purified material removal point 31, and it is conducted out at a point which lies close to the impure material removal point 32. Between the purified material removal point 31 and the impure material removal point 32 has been placed a separator, such as e.g. an insulating plate 17b, which prevents the flow of molten material between said removal points 31,32. In the embodiment of Fig. 1 crystallizing is accomplished on the outer surface of the rotating cylindrical shell surface 11. Naturally, crystallizing can equally be accomplished on the inner surface of the rotating cylindrical shell surface 11, in which case, of course, the cooling jacket 14 will be on the outside of the shell surface 11 and the shell surface 12 will be inside the shell surface 11. In the embodiment of Fig. 1, the cooled cylindrical shell surface 11 has been disposed to rotate about a vertical axis of rotation 29.

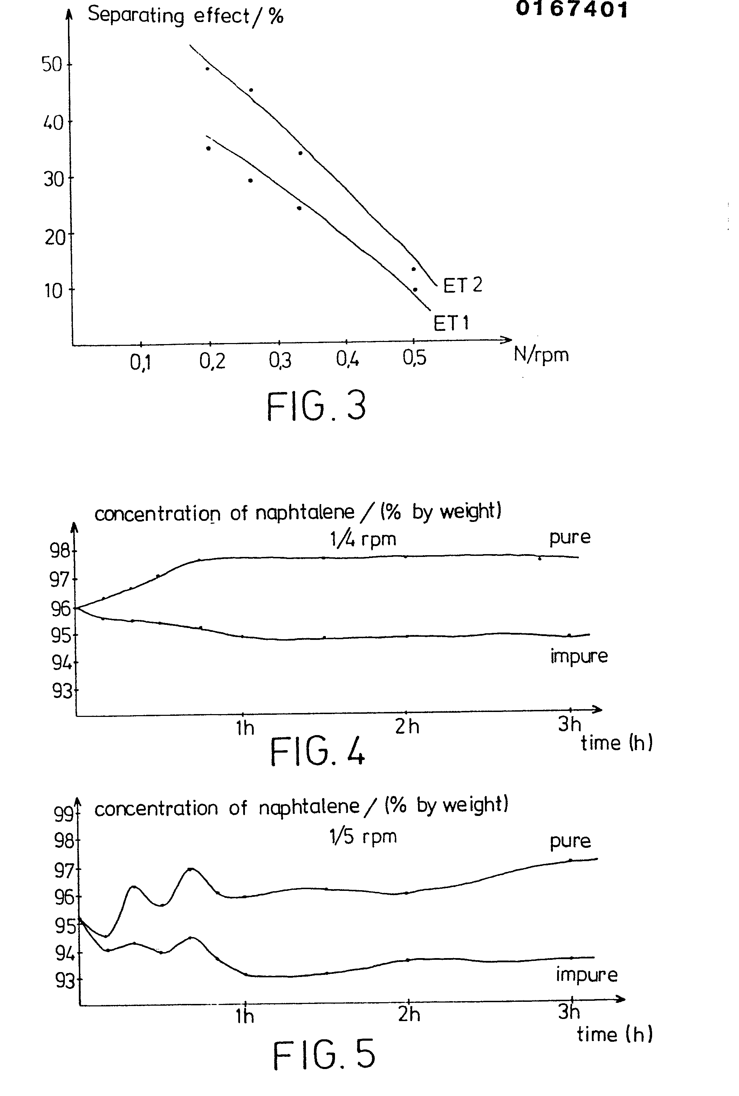

The embodiment depicted in Fig. 2 is otherwise the same as that of Fig. 1, except that in the embodiment of Fig. 2 another cylindrical shell surface 111 has been disposed inside the rotating shell surface 11 and at the same time inside the cooling jacket 14. Hereby, as shown in Fig. 2, annular spaces 13 and 113 are formed, both provided with members 21,22, respectively 121, for removing purified substance, with members 24,25, respectivley 124, for removing impure substance, and with members 18,19, respectively 118, for conducting in the substance mixture to be purified, in molten state. Also in the embodiment of Fig. 2 the annular space 113 is provided with a separator, or partition, 117b, which divides the annular space into two or more separate spaces. Each such separate annular space is then provided with members for removing purified and impure substances and with members for introducing the substances to be purified. The reference numeral 126 indicates a branch line, 127 a circulation line, and 128 a return line. It is obvious that any desired number of shell structures inside each other may be provided, whereby a plurality of purifying spaces can be connected in series or parallel and different purifying spaces can be used to purify different substances, provided that the crystallizing temperatures of the substances permit. At any event, using several purifying spaces improves the purifying capacity. In Fig. 3 is shown the separating effect of the means and procedure of the invention in per cent, plotted over speed of rotation. The substance to be purified is a naphthalene/$\beta$-methylnaphthalene mixture. The mixture contains 95% naphthalene. In Fig. 3, the purifying efficiency $ET1 = (W_{start} - W_{purified})/W_{start} \times 100\%$, respectively $ET2 = W_{unpurified} - W_{purified})/W_{unpurified} \times 100\%$. The value W is the concentration of impurities in the melt, in % by weight. In Figs 4 and 5 is presented the influence of time on the result of purification in separating the naphthalene/$\beta$-methylnaphthalene mixture at speed of rotation 1/4 r.p.m., respectively at 1/5 r.p.m. The cooling liquid entry temperature was 54°C and its exit temperature, 58-60°C. The temperature of the melt was 90 °C. The surface temperature of the melter body was 120-130°C. Figs 4 and 5 reveal that the separation attains a constant value after a period of about one hour.

In the foregoing, only some advantageous embodiments of the invention have been presented, and it is obvious to a person skilled in the art that numerous modifications thereof are feasible within the scope of the inventive idea presented in the claims following below.

Claims

1.  A procedure for separating or purifying organic substances from a mixture of substances in molten state by crystallizing the substance to be separated/purified on a cooled surface, characterized in that the substance mixture in molten state is conducted at an infeed point (30) into an annular space (13) confined by a rotating cylindrical shell surface (11), which is cooled, and by another cylindrical shell surface (12) spaced therefrom, the substance to be purified/separated being crystallized on the surface of said rotating, cooled shell (11) to form a deposit (20), which is melted at a first removal point (31) located, as seen in the direction of rotation (A) of the cooled shell surface (11), downstream from the infeed point (30), at least part of the melted purified material being removed and the remaining part being conducted in a return flow (B) back along the annular space (13), and that impure molten substance mixture is conducted off at a second removal point (32) located, as seen in the direction of rotation (A) of the cooled shell surface (11), upstream to the infeed point (30).

2.  Procedure according to claim 1, characterized in that the fluid cooling the cooled shell surface (11) is introduced at a point which lies close to the purified material removal point (31) and is conducted out at a point which lies close to the impure material removal point (32).

3.  Procedure according to claim 1 or 2, characterized in that between the purified material removal point (31) and the impure material removal point (32) is placed a separator (17b) which prevents the flow of molten material between said removal points (31,32).

4.  Procedure according to any one of claims 1-3, characterized in that crystallization is effected on the inner surface of the rotating cylindrical shell (11).

5.  Procedure according to any one of claims 1-3, characterized in that crystallization is effected on the outer surface of the rotating cylindrical shell (11).

6. Procedure according to any one of claims 1-5, characterized in that at least part of the impure material removed at the second removal point (32) is conducted back to the infeed point (30).

7. Means for separating and purifying substances, wherein crystallizing takes place from a mixture in molten state of the substances to be separated onto a cooled surface, characterized in that the means (10) comprises a first rotating, cylindrical shell surface (11) which can be cooled, a second cylindrical shell surface (12) spaced from said first shell surface, an annular space (13) between said first rotating shell surface (11) and said second cylindrical shell surface (12), members (21,22) for removing purified substance from the surface of said rotating, cooled shell (11) by remelting at a point (31) located, as seen in the direction of rotation (A) of said rotating, cooled shell (11), downstream from the point (30) where the molten substance mixture to be treated is introduced, members (24,25) for removing impure substance mixture from said annular space (13) at a point (32) located, as seen in the direction of rotation (A) of said cooled shell surface, upstream to the point (30) where the substance mixture to be treated is introduced, members (18,19) for conducting the substance mixture to be treated in molten state into said annular space (13), members (15,16) for cooling said rotating shell surface (11), and members (23) for melting the pure substance mixture close to the pure substance removal point (31).

8. Means according to claim 7, 8, characterized in that said cooled cylindrical shell surface (11) has been disposed to rotate about a vertical axis of rotation (29).

9. Means according to claim 7 or 8, characterized in that said first rotating cylinder shell (11) and said second cylindrical shell (12) are located centrically or eccentrically in relation to each other.

10. Means according to any one of claims 7-9, characterized in

0167401

that on both sides of said first rotating shell surface (11) is provided a second cylindrical shell surface (111) spaced therefrom, whereby two annular spaces (13,113) are formed, in both of them being provided members for removing purified substance, for removing impure substance and for introducing, in molten state, substance to be purified.

11. Means according to claim 10, characterized in that there are two or more shell surfaces (111) within each other.

12. Means according to any one of claims 7-11, characterized in that said annular space (13; 113) has been provided with partitions (17b; 117b) which divide the annular space into a plurality of separate spaces, each of them provided with members (21,22;121, respectively 24,25;124) for removing purified and impure substances and with members (18,19;118) for introducing substances to be purified.

13. Means according to any one of claims 7-12, characterized in that the means comprises a return line (28,128) for conducting part of the impure product from the second removal point (32) to the infeed line (18;128).

0167401

FIG.1

FIG.2

Separating effect / %  2/2  0167401

ET 2

ET 1

N/rpm

FIG. 3

concentration of naphtalene / (% by weight)

1/4 rpm  pure

impure

1h  2h  3h  time (h)

FIG. 4

concentration of naphtalene / (% by weight)

1/5 rpm  pure

impure

1h  2h  3h  time (h)

FIG. 5